# EUROPÄISCHE PATENTSCHRIFT

(11) **EP 3 390 999 B1**
(45) Veröffentlichungstag und Bekanntmachung des Hinweises auf die Patenterteilung: **05.01.2022**
(21) Anmeldenummer: 16809375.5
(22) Anmeldetag: 09.12.2016
(51) Int. Cl.: G01L 3/10

(54) **STATORHALTER, STATORBAUGRUPPE, VERFAHREN ZUM ZUSAMMENBAU EINER STATORBAUGRUPPE, DREHMOMENTSENSORVORRICHTUNG MIT EINER STATORBAUGRUPPE UND EINEM STATORHALTER UND KRAFTFAHRZEUG MIT EINER DREHMOMENTSENSORVORRICHTUNG**
STATOR HOLDER, STATOR MODULE METHOD FOR ASSEMBLING A STATOR MODULE, TORQUE SENSOR DEVICE HAVING A STATOR MODULE AND A STATOR HOLDER, AND MOTOR VEHICLE HAVING A TORQUE SENSOR DEVICE
SUPPORT DE STATOR, ENSEMBLE STATOR, PROCÉDÉ D'ASSEMBLAGE D'UN ENSEMBLE STATOR, DISPOSITIF DE DÉTECTION D'UN COUPLE MUNI D'UN ENSEMBLE STATOR ET D'UN SUPPORT DE STATOR, ET VÉHICULE AUTOMOBILE MUNI D'UN DISPOSITIF DE DÉTECTION D'UN COUPLE

(30) Priorität: 18.12.2015 DE 102015122171
(43) Veröffentlichungstag der Anmeldung: 24.10.2018
(73) Patentinhaber: Valeo Schalter und Sensoren GmbH, 74321 Bietigheim-Bissingen (DE)
(72) Erfinder: RACHUI, Dirk, 74321 Bietigheim-Bissingen (DE); FROEHLICH, Ekkehart, 74321 Bietigheim-Bissingen (DE); THOM, Jens, 74321 Bietigheim-Bissingen (DE)
(86) Internationale Anmeldenummer: PCT/EP2016/080386
(87) Internationale Veröffentlichungsnummer: WO 2017/102576

(56) Entgegenhaltungen:
- DE-T5-112013 003 921
- US-A1- 2005 247 138
- US-A1- 2015 276 524

## Beschreibung

Die Erfindung betrifft einen Statorhalter für eine Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments, wobei der Statorhalter einen sich in axialer Richtung entlang einer Drehachse des Statorhalters erstreckenden Aufnahmebereich und einen, in einem funktionsgemäßen Verwendungszustand in axialer Richtung an den Aufnahmebereich angrenzenden, sich in axialer Richtung entlang der Drehachse des Statorhalters erstreckenden Befestigungsbereich aufweist. Dabei ist der Aufnahmebereich zur Aufnahme eines erstens Statorelements und eines zweiten Statorelements am Statorhalter ausgebildet und der Befestigungsbereich zur drehfesten Befestigung des Statorhalters auf der Welle, wobei der Befestigungsbereich dazu eine Befestigungshülse aufweist.

Des Weiteren betrifft die Erfindung eine Statorbaugruppe für eine Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments, wobei die Statorbaugruppe einen Statorhalter, ein erstes Statorelement, ein zweites Statorelement und zwei Fixierringe aufweist. Dabei dient ein erster Fixierring zur axialen Festlegung des ersten Statorelements am Statorhalter und ein zweiter Fixierring zur axialen Festlegung des zweiten Statorelements am Statorhalter.

Ferner betrifft die Erfindung ein Verfahren zum Zusammenbau einer vorbeschriebenen Statorbaugruppe, die einen vorbeschriebenen Statorhalter aufweist, sowie eine Drehmomentsensorvorrichtung mit einer vorbeschriebenen Statorbaugruppe mit einem vorbeschriebenen Statorhalter und ein Kraftfahrzeug mit einer vorbeschriebenen Drehmomentsensorvorrichtung.

Statorhalter und Statorbaugruppen für Drehmomentsensorvorrichtungen sowie gattungsgemäße Drehmomentsensorvorrichtungen für Lenkwellen von Kraftfahrzeugen sind aus dem Stand der Technik grundsätzlich bekannt, beispielsweise aus der DE 10 2013 006 379 A1 oder der EP 1 269 133 B1. Die Drehmomentsensorvorrichtungen sind dabei in der Regel aus mehreren Komponenten zusammengesetzt und weisen üblicherweise unter anderem eine Statorbaugruppe mit einem Statorhalter auf.

Des Weitere offenbart die DE 11 2013 003 921 T5 eine Drehmomentsensoreinheit mit einem magnetischen Element. das am ersten Ausgangswellenelement fixiert ist, und mit einem Paar erster und zweiter Jochelemente und die an einem Eingangswellenelement fixiert sind und eine äußere Umfangsseite des magnetischen Elements und einen magnetischen Sensor umschließen, die eingerichtet ist, um einen magnetischen Fluss zu erfassen, der zwischen den Jochelementen und hindurchgeht. Das magnetische Element ist mit einer Buchse und einem Permanentmagneten versehen. Die Buchse ist aus einem Metallmaterial in einer im Wesentlichen zylindrischen Form ausgebildet und weist eine Mehrzahl von Abstützbereichen auf, die sich radial an einem axialen Ende davon erstrecken, und weist eine Mehrzahl von Eingriffsvorsprüngen auf, die sich axial an Positionen umfangsmäßig in der Mitte zwischen den Abstützbereichen erstrecken. Der Permanentmagnet ist ringförmig ausgebildet und weist eine Mehrzahl von Eingriffsnuten auf, die in eine innere Umfangsfläche davon geschnitten sind und sich axial über ihre Länge erstrecken. Ein auf Kunstharz basierendes Füllmaterial ist über den Permanentmagneten und die Buchse angeordnet, so dass der Permanentmagnet und die Buchse über das Füllmaterial gekoppelt sind.

Die US 2005/247138 A1 offenbart einen Drehmomentsensor, bei dem eine erste Welle und eine zweite Welle axial verbunden sind. Ein Torsionsstab wandelt ein zwischen den beiden Wellen übertragenes Drehmoment in eine Verdrehung um. Ein Vielpolmagnet ist mit der ersten Welle verbunden. Ein Satz von Magnetjochen ist an der zweiten Welle befestigt und in einem von dem Vielpolmagnet erzeugten Magnetfeld angeordnet. Die Magnetjoche sind einander in axialer Richtung gegenüberliegend, durch einen Luftspalt getrennt, angeordnet. Ein Magnetfeldsensor ist vorgesehen, um die in dem Luftspalt erzeugte magnetische Flussdichte zu erfassen. Ein unmagnetisches Distanzelement ist zwischen den Magnetjochen als ein Mittel zur Positionierung der Magnetjoche angeordnet. Das Distanzelement und die Magnetjoche sind durch Harzumformung integriert.

Die US 2015/276524 A1 offenbart eine Sensoreinrichtung zum Messen einer einen Rotationszustand eines Wellenteils eines Kraftfahrzeugs, insbesondere einer Lenkwelle des Kraftfahrzeugs, charakterisierenden Messgröße, mit einem Halter, der mit dem Wellenteil des Kraftfahrzeugs verbindbar ist, mit einem am Halter angeordneten magnetischen Statorteil, welches zum Leiten von magnetischem Fluss von einem Magneten hin zu einem Magnetsensor ausgebildet ist und ein ringförmiges radiales Basiselement aufweist, welches mit seiner axialen Frontseite an dem Halter axial abgestützt ist, und mit einem Befestigungselement, mittels welchem das Statorteil von seiner der Frontseite gegenüberliegenden axialen Rückseite zumindest in axialer Richtung an dem Halter festgelegt ist, wobei der Halter zumindest eine Schweißrippe aufweist, über welche der Halter mit dem Befestigungselement durch Reibschweißen verbunden ist.

Drehmomentsensorvorrichtungen sind dazu ausgebildet, ein auf eine Welle aufgebrachtes Drehmoment zu erfassen, wobei insbesondere in Kraftfahrzeugen Drehmomentsensorvorrichtungen dazu vorgesehen sind, ein vom Fahrer auf eine Lenkwelle aufgebrachtes Lenkmoment zu erfassen. Solche Drehmomentsensorvorrichtungen werden beispielsweise bei elektrischen Lenksystemen eingesetzt, um den elektrischen Antriebsmotor des Lenksystems basierend auf dem von einem Fahrer aufgebrachten Lenkmoment anzusteuern, beispielsweise um eine entsprechende Lenkunterstützung bereitzustellen.

In der Regel werden Drehmomentsensorvorrichtungen in Verbindung mit einer axial geteilten Welle und mit einem Torsionsstab mit definierter, bekannter Torsionssteifigkeit eingesetzt, wobei der Torsionsstab dabei einen ersten Teil der axial geteilten Welle mit einem zweiten Teil der axial geteilten Welle verbindet. Wird ein Drehmoment auf die Welle aufgebracht, bewirkt dies eine Verdrehung der beiden Teile der Welle zueinander um einen messbaren Verdrehwinkel, wobei der Verdrehwinkel sich abhängig vom aufgebrachten Drehmoment und der Steifigkeit des Torsionsstabes einstellt, so dass aus dem erfassten Verdrehwinkel bei definierter, bekannter Steifigkeit des Torsionsstabes das aufgebrachte Drehmoment ermittelt werden kann.

Zur Messung des infolge eines aufgebrachten Drehmoments resultierenden Verdrehwinkels sind verschiedene Messprinzipien und Sensoranordnungen bekannt, wobei sehr häufig magnetische Sensorsysteme zum Einsatz kommen, bei denen ein umlaufender, meistens als Permanentmagnet ausgebildeter Ringmagnet mit dem ersten Teil der Lenkwelle drehfest verbunden ist und bei denen ein Statorhalter, an dem magnetisch leitfähige Statorelemente aufgenommen sind, drehfest mit dem zweiten Teil der Welle verbunden ist, wobei der Statorhalter üblicherweise in radialer Richtung mit einem kleinen Luftspalt konzentrisch um den Ringmagneten herum angeordnet ist. Über die am Statorhalter befestigten Statorelemente, welcher üblicherweise aus zwei separaten Teilen mit jeweils einem ringscheibenförmigen Bereich bestehen, welcher sich in radialer Richtung von der Welle weg nach außen erstreckt, und aus sich in axialer Richtung erstreckenden Laschen kann der magnetische Fluss des Ringmagneten zu einem Magnetsensor, beispielsweise einem Hall-Sensor, geleitet werden und ausgewertet werden.

Wird der drehfest mit dem ersten Teil der Welle verbundene Ringmagnet durch eine Rotationsbewegung der Welle relativ zum mit dem zweiten Teil der Welle verbundenen Statorhalter bewegt, ändert sich die magnetische Flussdichte in den beiden am Statorhalter befestigten Statorelementen, was mittels des Magnetsensors erfasst werden kann. Die Änderung der magnetischen Flussdichte in den beiden Statorelementen ist dabei unter anderem abhängig von der Größe der Relativbewegung des Ringmagneten gegenüber dem Statorhalter, d.h. vom Verdrehwinkel. Somit kann aus der Änderung der erfassten Flussdichte auf den Verdrehwinkel geschlossen werden und aus dem Verdrehwinkel wiederum kann mit Kenntnis der Torsionssteifigkeit des Torsionsstabs das auf die Welle aufgebrachte Drehmoment ermittelt werden.

Die aus dem Stand der Technik bekannten Statorhalter weisen zur Befestigung auf dem zweiten Teil der Welle üblicherweise einen sich in axialer Richtung erstreckenden Befestigungsbereich mit einer Befestigungshülse auf, an die sich ein Aufnahmebereich anschließt, welcher zur Aufnahme der beiden Statorelemente ausgebildet ist, wobei bei den aus dem Stand der Technik bekannten Lösungen der Statorhalter einstückig ausgebildet ist, d.h. der Aufnahmebereich und der Befestigungsbereich sind einstückig miteinander verbunden.

Der Aufnahmebereich des Statorhalters ist dabei in der Regel hülsenförmig ausgebildet und weist an seiner Innenseite korrespondierend zu den sich in axialer Richtung der Statorelemente erststreckenden Laschen entsprechende Ausnehmungen auf, in welche die Laschen der Statorelemente jeweils in axialer Richtung von außen eingeführt werden können.

Da üblicherweise an einer Seite des Aufnahmebereichs der Befestigungsbereich mit der Befestigungshülse anschließt, muss ein Innendurchmesser des Statorelements, das von einer dem Befestigungsbereich zugewandten Seite in axialer Richtung in den Aufnahmebereich eingeführt wird, zumindest größer als ein Außendurchmesser der Befestigungshülse sein.

Werden in ihrer Größe und ihrer Ausgestaltung, speziell bzgl. des Innendurchmessers, standardisierte Statorelemente verwendet oder sollen derartige Statorelemente verwendet werden, kann eine entsprechende Statorbaugruppe mit einem aus dem Stand der Technik bekannten Statorhalter nur bis zu einem bestimmten Wellendurchmesser verwendet werden. Für größere Wellendurchmesser ist die nächste Statorelementgröße erforderlich, was aus Bauraum- und Kostengründen oftmals unerwünscht ist.

Eine Aufgabe der Erfindung ist es somit, einen diesbezüglich verbesserten Statorhalter bereitzustellen, insbesondere einen Statorhalter, der es ermöglicht, den Einsatzbereich von standardisierten Statorelementen in Richtung größerer Wellendurchmesser zu erweitern. Eine weitere Aufgabe ist es, eine verbesserte Statorbaugruppe, ein alternatives Verfahren zum Zusammenbau einer Statorbaugruppe, eine verbesserte Drehmomentsensorvorrichtung sowie ein verbessertes Kraftfahrzeug bereitzustellen.

Diese Aufgabe wird durch einen erfindungsgemäßen Statorhalter, durch eine erfindungsgemäße Statorbaugruppe, durch ein erfindungsgemäßes Verfahren zum Zusammenbau einer Statorbaugruppe, durch eine erfindungsgemäße Drehmomentsensorvorrichtung und durch ein erfindungsgemäßes Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche der Beschreibung und der Figuren und werden im Folgenden näher erläutert.

Ein erfindungsgemäßer Statorhalter für eine Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments, weist einen sich in axialer Richtung entlang einer Drehachse des Statorhalters erstreckenden Aufnahmebereich und einen, in einem funktionsgemäßen Verwendungszustand in axialer Richtung an den Aufnahmebereich angrenzenden, sich in axialer Richtung entlang der Drehachse des Statorhalters erstreckenden Befestigungsbereich auf, wobei der Aufnahmebereich zur Aufnahme eines erstens Statorelements und eines zweiten Statorelements am Statorhalter ausgebildet ist und der Befestigungsbereich eine Befestigungshülse zur drehfesten Befestigung des Statorhalters auf der Welle aufweist.

Erfindungsgemäß sind der Aufnahmebereich und der Befestigungsbereich durch getrennte Bauteile und/oder getrennte Baugruppen gebildet. D.h. erfindungsgemäß ist der Statorhalter nicht einstückig ausgebildet, sondern der Aufnahmebereich und der Befestigungsbereich müssen für einen funktionsgemäßen Verwendungszustand erst zusammengesetzt werden. Dies hat den Vorteil, dass das Statorelement, welches von der dem Befestigungsbereich zugewandten Seite in axialer Richtung in den Aufnahmebereich eingeführt wird, nicht mehr über die Befestigungshülse geführt werden muss. D.h. der Innendurchmesser dieses Statorelementes muss nicht mehr größer als der Außendurchmesser der Befestigungshülse sein. Dadurch können mit dem gleichen Statorelement Befestigungshülsen mit einem größeren Außendurchmesser verwendet werden. Infolgedessen können Statorbaugruppe und/oder Drehmomentsensorvorrichtungen mit einem erfindungsgemäßen Statorhalter bei gleicher Größe der Statorelemente auch bei Wellen mit größeren Durchmessern eingesetzt werden.

In einer vorteilhaften Ausgestaltung eines erfindungsgemäßen Statorhalters ist der Statorhalter derart ausgebildet, dass das erste Statorelement, wie bei den aus dem Stand der Technik bekannten Lösungen, in axialer Richtung von einer, bezogen auf einen funktionsgemäßen Verwendungszustand des Statorhalters, vom Befestigungsbereich abgewandten Seite in den Aufnahmebereich einführbar ist und vorzugsweise mittels eines zweiten, auf der vom Befestigungsbereich abgewandten Seite in axialer Richtung montierbaren Fixierringes axial am Statorhalter festlegbar ist.

Erfindungsgemäß ist der Statorhalter derart ausgebildet, dass, wie bei den aus dem Stand der Technik bekannten Lösungen, das zweite Statorelement in axialer Richtung von einer, bezogen auf einen funktionsgemäßen Verwendungszustand des Statorhalters, dem Befestigungsbereich zugewandten Seite in den Aufnahmebereich einführbar ist und vorzugsweise mittels eines ersten, auf der dem Befestigungsbereich zugewandten Seite in axialer Richtung montierbaren Fixierringes axial am Statorhalter festlegbar ist.

Ein erfindungsgemäßer Statorhalter ist bevorzugt in der Weise ausgebildet, dass mit dem Einführen eines Statorelementes dieses gleichzeitig in radialer Richtung positioniert wird. Dazu weist der Statorhalter im Aufnahmebereich vorzugsweise wenigstens für jedes Statorelement wenigstens eine Führung auf. Dadurch lässt sich auf besonders einfache Art und Weise ein Luftspalt zu einem, in einem funktionsgemäßen Verwendungszustand einer erfindungsgemäßen Drehmomentsensorvorrichtung im Zentrum des Aufnahmebereichs angeordneten Ringmagneten einstellen.

Erfindungsgemäß ist der erste Fixierring Teil des den Befestigungsbereich bildenden Bauteils und/oder der den Befestigungsbereich bildenden Baugruppe. Dabei ist der erste Fixierring vorzugsweise in einem, bezogen auf einen funktionsgemäßen Verwendungszustand des Statorhalters, dem Aufnahmebereich zugewandten Endbereich der Befestigungshülse an der Befestigungshülse angebunden. D.h. der erste Fixierring ist bevorzugt an der Befestigungshülse befestigt bzw. bildet mit der Befestigungshülse eine Baugruppe, insbesondere den Befestigungsbereich.

Die Befestigungshülse eines erfindungsgemäßen Statorhalters kann aus Metall und/oder aus Kunststoff bestehen, wobei eine Befestigungshülse aus Metall beispielsweise durch Drehen oder Tiefziehen hergestellt sein kann. Der zweite Fixierring kann ebenfalls aus Metall und/oder Kunststoff hergestellt sein. Er kann auf verschiedenste Arten mit der Befestigungshülse verbunden sein, je nach Werkstoffkombination von dem zweiten Fixierring und der Befestigungshülse. Beispielsweise kann er durch Kleben oder Schweißen mit der Befestigungshülse verbunden sein oder in einem Kunststoffspritzgießverfahren an die Befestigungshülse angespritzt sein.

Eine erfindungsgemäße Statorbaugruppe für eine Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments weist einen vorbeschriebenen, erfindungsgemäßen Statorhalter, ein erstes Statorelement, ein zweites Statorelement und zwei Fixierringe auf, wobei ein zweiter Fixierring zur axialen Festlegung des ersten Statorelements am Statorhalter dient und ein erster Fixierring zur axialen Festlegung des zweiten Statorelements am Statorhalter.

Bevorzugt ist das erste Statorelement dabei von der vom Befestigungsbereich abgewandten Seite in den Aufnahmebereich des Statorhalters eingeführt, besonders bevorzugt in radialer Richtung positioniert, und insbesondere mittels des ersten Fixierringes axial am Statorhalter festgelegt.

Das zweite Statorelement ist bevorzugt von der dem Befestigungsbereich zugewandten Seite in den Aufnahmebereich eingeführt, besonders bevorzugt in radialer Richtung positioniert, und mittels des den Befestigungsbereichs bildenden Bauteils bzw. der den Befestigungsbereich bildenden Baugruppe axial am Statorhalter festgelegt, wobei der erste Fixierring Teil des den Befestigungsbereich bildenden Bauteils und/oder der den Befestigungsbereich bildenden Baugruppe ist.

Der erste Fixierring ist dabei in einem, bezogen auf einen funktionsgemäßen Verwendungszustand des Statorhalters, dem Aufnahmebereich zugewandten Endbereich der Befestigungshülse an der Befestigungshülse angebunden bzw. befestigt.

Ein erfindungsgemäßes Verfahren zum Zusammenbau einer Statorbaugruppe für eine Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments, wobei die Statorbaugruppe eine vorbeschriebene, erfindungsgemäße Statorbaugruppe ist, ist dadurch gekennzeichnet, dass in einem ersten Schritt das zweite Statorelement in axialer Richtung von einer, bezogen auf einen funktionsgemäßen Verwendungszustand des Statorhalters, dem Befestigungsbereich zugewandten Seite in den Aufnahmebereich des Statorhalters eingeführt wird.

In einem zweiten Schritt wird der Aufnahmebereich des Statorhalters mit dem Befestigungsbereich des Statorhalters verbunden.

Insbesondere gleichzeitig mit dem Verbinden von Aufnahmebereich und Befestigungsbereich im zweiten Schritt, gegebenenfalls in einem weiteren Schritt, wird das zweite Statorelement in axialer Richtung am Statorhalter mittels eines ersten, auf der dem Befestigungsbereich des Statorhalters zugewandten Seite in axialer Richtung montierbaren Fixierringes axial festgelegt.

Bei einer vorteilhaften Durchführung eines erfindungsgemäßen Verfahrens wird in einem weiteren Schritt ein erstes Statorelement in axialer Richtung von einer, bezogen auf einen funktionsgemäßen Verwendungszustand des Statorhalters, vom Befestigungsbereich abgewandten Seite in den Aufnahmebereich des Statorhalters eingeführt und vorzugsweise in axialer Richtung am Statorhalter mittels eines zweiten auf der vom Befestigungsbereich des Statorhalters abgewandten Seite in axialer Richtung montierbaren Fixierringes axial festgelegt, insbesondere in einem weiteren Schritt. Selbstverständlich kann das erste Statorelement dabei sowohl vor den im Zusammenhang mit dem zweiten Statorelement und dem Befestigungsbereich vorbeschriebenen Schritten montiert und/oder in axialer Richtung festgelegt werden oder danach. Ferner muss die axiale Festlegung mittels des ersten Fixierringes auch nicht unmittelbar im Anschluss an das Einführen des Statorelementes in den Aufnahmebereich erfolgen. Beispielsweis kann dies auch erst nach dem Einführen und axialen Festlegen des zweiten Statorelementes erfolgen.

Eine erfindungsgemäße Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments, weist eine vorbeschriebene erfindungsgemäße Statorbaugruppe auf.

Ein erfindungsgemäßes Kraftfahrzeug mit einer Drehmomentsensorvorrichtung zur Erfassung eines auf eine Lenkwelle eines Kraftfahrzeugs aufgebrachten Drehmoments weist eine vorbeschriebene, erfindungsgemäße Drehmomentsensorvorrichtung auf.

Die mit Bezug auf den Statorhalter und die Statorbaugruppe vorgestellten, vorteilhaften Ausgestaltungen und deren Vorteile gelten dabei nicht nur für den Statorhalter und die Statorbaugruppe, sondern auch entsprechend für ein erfindungsgemäßes Verfahren, eine erfindungsgemäße Drehmomentsensorvorrichtung und ein erfindungsgemäßes Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels unter Bezugnahme auf die beigefügten Zeichnungen näher erläutert. Es zeigen:
- Fig. 1a: eine aus dem Stand der Technik bekannte Statorbaugruppe in Explosionsdarstellung,
- Fig. 1b: die aus dem Stand der Technik bekannte Statorbaugruppe in einem zusammengebauten Zustand in perspektivischer Darstellung,
- Fig. 1c: einen Schnitt durch die in Fig. 1b dargestellte, aus dem Stand der Technik bekannte Statorbaugruppe,
- Fig. 1d: einen Schnitt durch die in den Fig. 1b und 1c dargestellte aus dem Stand der Technik bekannte Statorbaugruppe vor dem Einführen des zweiten Statorelementes in den Aufnahmebereich des Statorhalters,
- Fig. 2: einen erfindungsgemäßen Statorhalter in Explosionsdarstellung,
- Fig. 3a: eine erfindungsgemäße Statorbaugruppe mit einem erfindungsgemäßen Statorhalter in Explosionsdarstellung,
- Fig. 3b: die erfindungsgemäße Statorbaugruppe aus Fig. 3a in einem zusammengebauten Zustand in perspektivischer Darstellung,
- Fig. 3c: einen Schnitt durch die in Fig. 3b dargestellte, erfindungsgemäße Statorbaugruppe,
- Fig. 3d: die erfindungsgemäße Statorbaugruppe aus den Fig. 3b und 3c in Schnittdarstellung vor dem Einführen eines zweiten Statorelementes in den Aufnahmebereich des Statorhalters und
- Fig. 3e: die erfindungsgemäße Statorbaugruppe aus den Fig. 3b und 3c in Schnittdarstellung nach dem Einführen des zweiten Statorelementes in den Aufnahmebereich, jedoch vor der axialen Festlegung des zweiten Statorelementes.

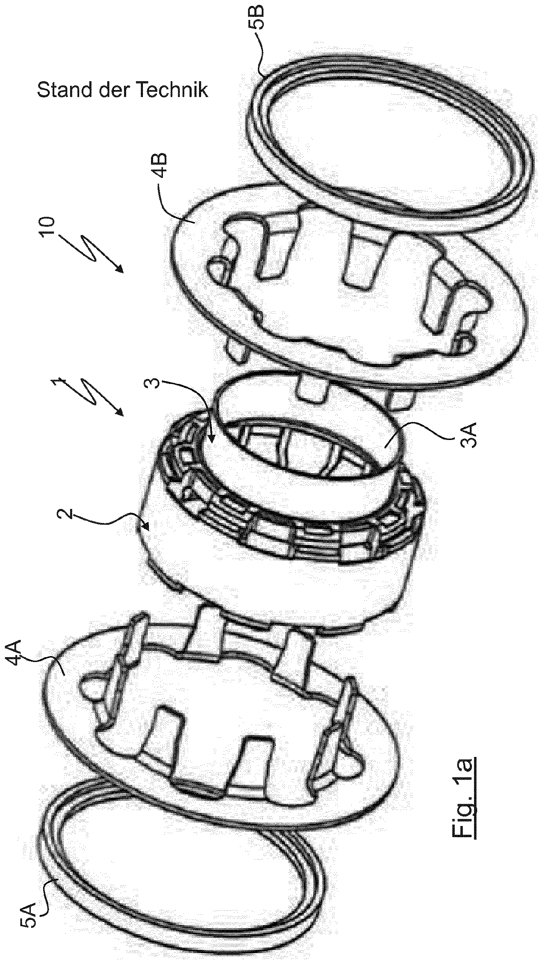

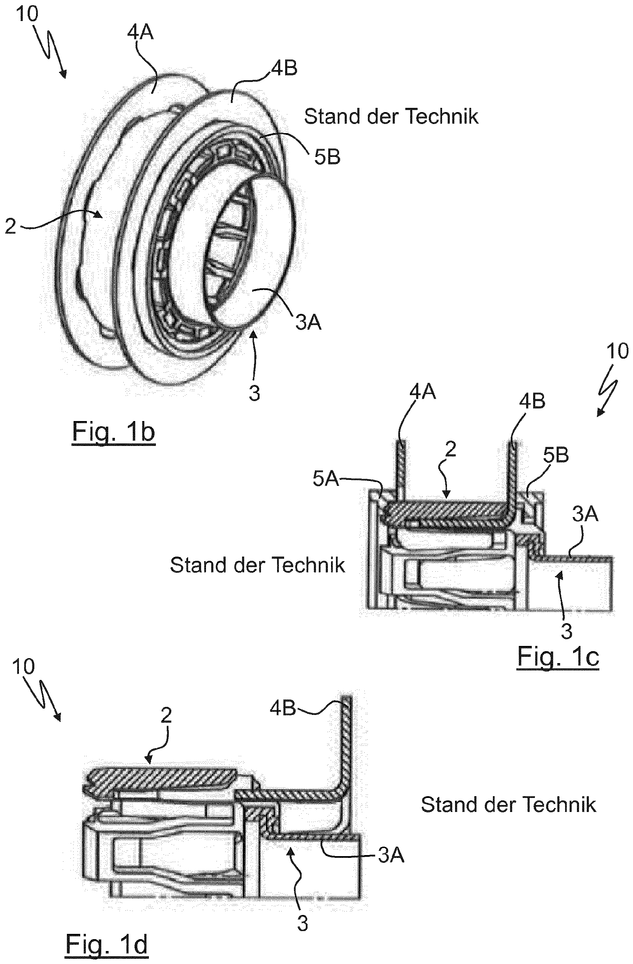

Fig. 1 zeigt eine aus dem Stand der Technik bekannte Statorbaugruppe 10 für eine aus dem Stand der Technik bekannte Drehmomentsensorvorrichtung in Explosionsdarstellung, wobei die Statorbaugruppe 10 speziell für eine Drehmomentsensorvorrichtung ausgebildet ist, welche zur Erfassung eines auf eine hier nicht dargestellten Lenkwelle eines Kraftfahrzeugs aufgebrachten Drehmoments konzipiert ist, wobei die Lenkwelle einen ersten Teil und einen zweiten Teil aufweist, die jeweils mittels eines Torsionsstabes in axialer Richtung miteinander verbunden sind und so durch Aufbringen eines Drehmomentes gegeneinander verdrehbar sind. Mithilfe der Drehmomentsensorvorrichtung, für welche die hier beschriebene Statorbaugruppe 10 vorgesehen ist, kann die Verdrehung erfasst werden und anhand dieser das auf die Welle aufgebrachte Drehmoment ermittelt werden. Gattungsgemäße Drehmomentsensorvorrichtungen, insbesondere deren Aufbau und die erforderliche Ausgestaltung der Komponenten, insbesondere von Statorhalter und Statorbaugruppen, sind aus dem Stand der Technik allgemein bekannt, insbesondere aus der EP 1 269 133 B1 oder der DE 10 2013 006 379 A1, auf die diesbezüglich hiermit ausdrücklich verwiesen wird.

Die aus dem Stand der Technik bekannte Statorbaugruppe 10 aus Fig. 1 ist zur drehfesten Verbindung mit dem zweiten Teil der Lenkwelle ausgebildet und weist dazu einen Statorhalter 1 mit einem Aufnahmebereich 2 und einem Befestigungsbereich 3 auf, welche in axialer Richtung nebeneinanderliegend angeordnet sind.

Der Aufnahmebereich 2 ist dabei zur Aufnahme eines ersten Statorelementes 4A und eines zweiten Statorelementes 4B ausgebildet, wobei die beiden Statorelemente 4A und 4B jeweils axial mit ihren sich in axialer Richtung erstreckenden Laschen in radialer Richtung positioniert in den Aufnahmebereich 2 eingeführt werden können und jeweils mittels eines Fixierringes 5A bzw. 5B von außen axial am Statorhalter 1 festgelegt werden können. Unmittelbar angrenzend an den Aufnahmebereich 2 weist der Statorhalter 1 eine zylindrische Befestigungshülse 3A zur Verbindung des Statorhalters 1 mit dem zweiten Teil der Lenkwelle auf.

Zum besseren Verständnis ist in Fig. 1b die Statorbaugruppe 10 aus Fig. 1a in einem zusammengebauten Zustand in perspektivischer Darstellung gezeigt und in Fig. 1c in Schnittdarstellung. Insbesondere in Fig. 1c ist gut zu erkennen wie das zweite Statorelement 4B in axialer Richtung in den Aufnahmebereich 2 eingeführt ist und mittels des zweiten Fixierringes 5B axial am Aufnahmebereich 2 festgelegt ist. Das erste Statorelement 4A ist entsprechend von einer dem Befestigungsbereich 3 abgewandten Seite ebenfalls in axialer Richtung in den Aufnahmebereich 2 eingeführt worden und mittels des zugehörigen ersten Fixierringes 5A in axialer Richtung am Statorhalter 1 festgelegt.

Bei dieser Statorbaugruppe 10 sind der Aufnahmebereich 2 und die Befestigungshülse 3A des Befestigungsbereiches 3 fest miteinander verbunden, d.h. nicht zerstörungsfrei demontierbar. Aus dem Stand der Technik ist bekannt, eine Befestigungshülse 3A aus Metall vorzusehen und diese zur Herstellung des Aufnahmebereichs 2 mit Kunststoff zu umspritzen oder aber die Befestigungshülse 3A ebenfalls aus Kunststoff vorzusehen und zusammen mit dem Aufnahmebereich 2 einstückig herzustellen bzw. als Mehrkomponentenspritzgießteil.

Dadurch, dass die Befestigungshülse 3A bei diesem, aus dem Stand der Technik bekannten Statorhalter 1 fest mit dem Aufnahmebereich 2 verbunden ist, müssen zum Zusammenbau der Statorbaugruppe 10 das erste Statorelement 4A und das zweite Statorelement 4B jeweils in axialer Richtung von außen in den Aufnahmebereich 2 eingeführt werden, wobei das zweite Statorelement 4B über die Befestigungshülse 3A geführt werden muss, siehe Fig. 1d.

Dies bedeutet, dass der Innendurchmesser des zweiten Statorhalters 4B größer sein muss, als der maximale Außendurchmesser der Befestigungshülse 3A. Werden aus dem Stand der Technik bekannte, nur in definierten Abmessungsgrößen verfügbare, geometrisch standardisierte Statorelemente 4A, 4B verwendet bzw. ist die Verwendung standardisierter Statorelemente 4A, 4B Ziel, ergibt sich der maximal mögliche Außendurchmesser der Befestigungshülse 3A in Abhängigkeit vom Innendurchmesser des verfügbaren Statorelementes, in diesem Fall in Abhängigkeit vom Innendurchmesser des zweiten Statorelementes 4B. Durch den begrenzten Außendurchmesser der Befestigungshülse 3A ist infolgedessen ein Wellendurchmesser für die Lenkwelle nach oben hin begrenzt.

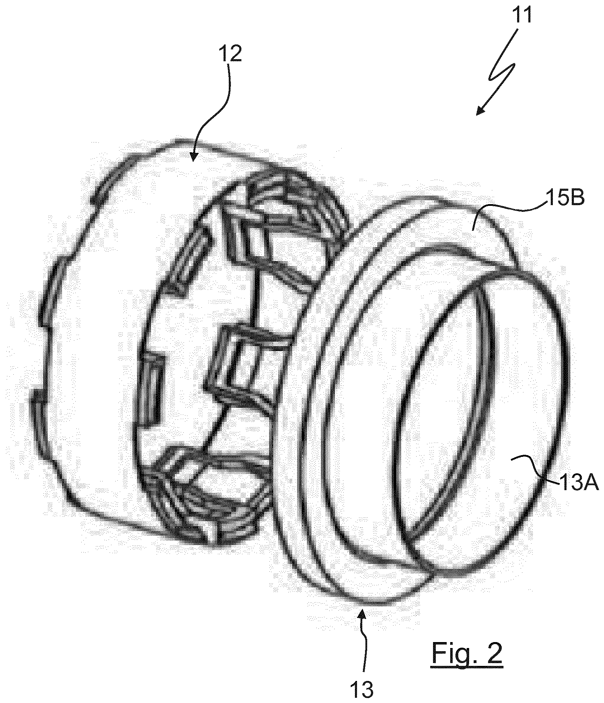

Für Lenkwellen mit größeren Wellendurchmessern ist es somit erforderlich, insbesondere wenn die Verwendung eines größeren Statorelementes nicht möglich ist, einen konstruktiv anders ausgestalteten Statorhalter zu verwenden, beispielsweise einen erfindungsgemäßen Statorhalter 11, wie er in Fig. 2 in Explosionsdarstellung gezeigt ist. Der in Fig. 2 dargestellte, erfindungsgemäße Statorhalter 11 ist vom Prinzip her ähnlich aufgebaut, wie der zuvor beschriebene, aus dem Stand der Technik bekannte Statorhalter 1. Der Statorhalter 11 weist im Unterschied dazu jedoch einen vom Aufnahmebereich 12 getrennt ausgebildeten Befestigungsbereich 13 auf. D.h. der Aufnahmebereich 12 und der Befestigungsbereich 13 sind durch separate Bauteile bzw. separate Baugruppen gebildet. Dadurch muss keines der beiden Statorelemente 14A, 14B mehr über die Befestigungshülse 13A in den Aufnahmebereich 12 eingeführt werden. Folglich muss der Innendurchmesser des zweiten Statorelementes 14B nicht größer sein als der Außerdurchmesser der Lenkwelle.

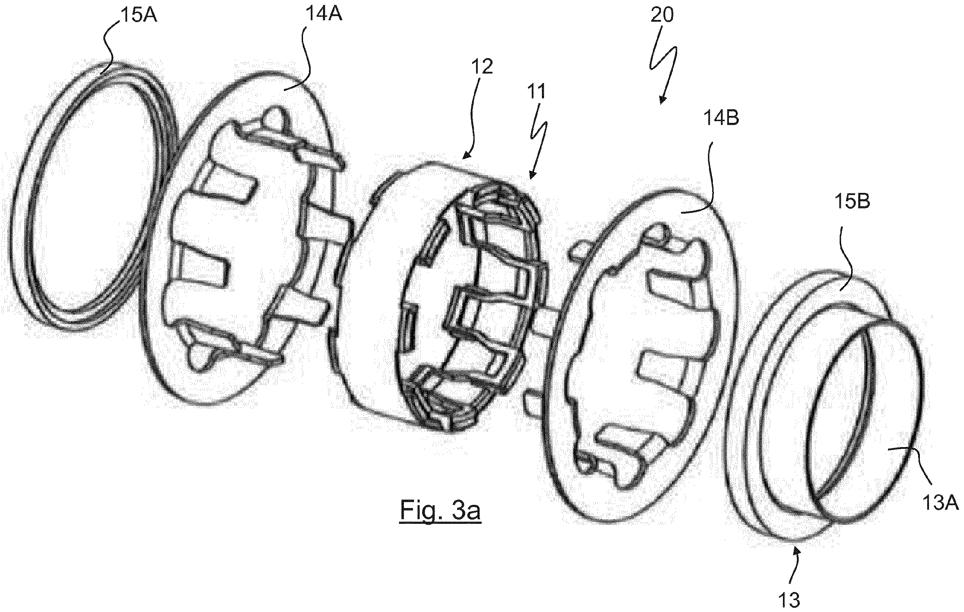

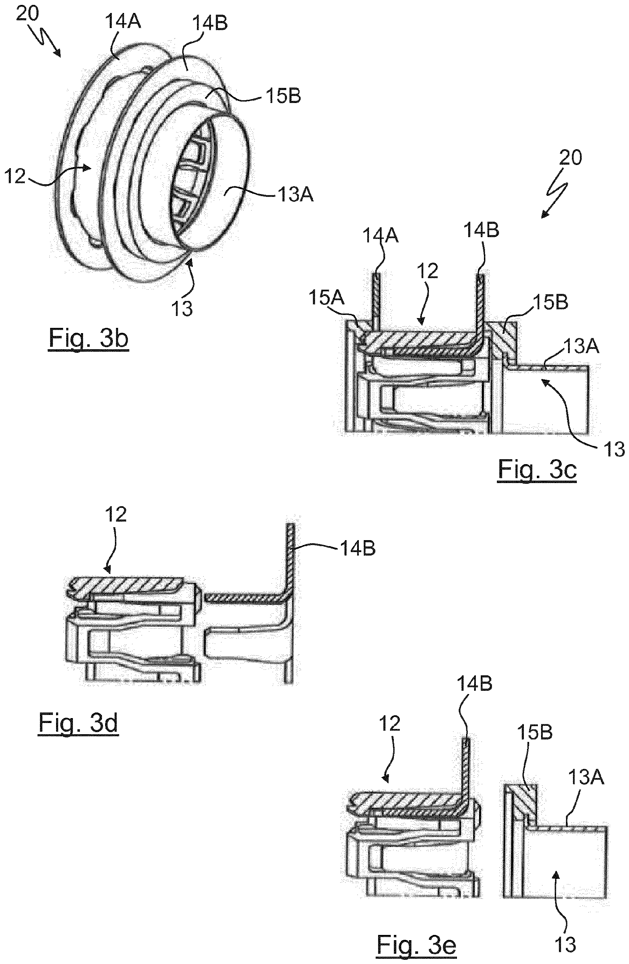

Dies ist anhand von Fig. 3a, welche eine erfindungsgemäße Statorbaugruppe 20 mit einem erfindungsgemäßen Statorhalter 11 in Explosionsdarstellung zeigt, gut zu erkennen. Zum besseren Verständnis ist in Fig. 3b ergänzend die erfindungsgemäße Statorbaugruppe 20 aus Fig. 3a im zusammengebauten Zustand gezeigt und in Fig. 3c in Schnittdarstellung. Der Unterschied zwischen dem Zusammenbau einer aus dem Stand der Technik bekannten Statorbaugruppe 10 und einer erfindungsgemäßen Statorbaugruppe 20 besteht aufgrund des erfindungsgemäßen Statorhalters 11 mit einem separat vom Befestigungsbereich 13 ausgebildeten Aufnahmebereich 12 folglich darin, dass zum Zeitpunkt des Einführens der beiden Statorelemente 14A und 14B, insbesondere zum Zeitpunkt des Einführens des zweiten Statorelementes 14B, die Befestigungshülse 13A nicht mit dem Aufnahmebereich 12 verbunden ist, so dass das zweite Statorelement 14B nicht über die Befestigungshülse 13A geführt werden muss.

Vielmehr wird die Befestigungshülse 13A, welche mit dem ersten Fixierring 15B fest verbunden ist und den Befestigungsbereich 13 bildet, erst nachdem das zweite Statorelement 14B in den Aufnahmebereich eingeführt ist, mit dem Aufnahmebereich 12 und dem darin eingeführten, zweiten Statorelement 14B verbunden.

Für einen besonders einfachen Montageprozess, insbesondere um gegenüber einem aus dem Stand der Technik bekannten Statorhalter 10 keinen zusätzlichen Montageschritt erforderlich zu machen, ist der erste Fixierring 15B dabei an einem, dem Aufnahmebereich 12 zugewandten Ende der Befestigungshülse 13A an der Befestigungshülse 13A angeordnet und fest mit dieser verbunden, so dass beim Verbinden des Befestigungsbereichs 13 mit dem Aufnahmebereich 12 automatisch das zuvor in den Aufnahmebereich 12 in axialer Richtung eingeführte, zweite Statorelement 14B axial am Statorhalter 11 festgelegt wird, siehe Fig. 3d und 3e.

Ein erfindungsgemäßer Statorhalter 11 ist bevorzugt aus Kunststoff ausgebildet und das erste Statorelement 14A und das zweite Statorelement 14B einer erfindungsgemäßen Statorbaugruppe 20 sind bevorzugt jeweils weichmagnetisch ausgebildet und magnetisch leitend, wobei die beiden Statorelemente 14A, 14B vorzugsweise jeweils einen senkrecht zur Drehachse der Lenkwelle orientierten, und sich in radialer Richtung nach außen erstreckenden, ringscheibenförmigen Bereich aufweisen, wobei in einem funktionsgemäßen, zusammengebauten Zustand der Statorbaugruppe 20 die ringscheibenförmig ausgebildeten Bereiche des ersten Statorelementes 14A und des zweiten Statorelementes 14B vorzugsweise in axialer Richtung voneinander beabstandet in parallelen Ebenen angeordnet sind.

Mithilfe eines erfindungsgemäßen Statorhalters 11 bzw. einer erfindungsgemäßen Statorbaugruppe 20 kann somit eine erfindungsgemäße Drehmomentsensorvorrichtung bereitgestellt werden, welche, ohne auf die Verwendung standardisierter verfügbarer Statorelemente verzichten zu müssen, für größere Wellendurchmesser genutzt werden als eine aus dem Stand der Technik bekannte Drehmomentsensorvorrichtung. Dadurch ergibt sich ein erhebliches Kosteneinsparungspotential, zumal der Montageprozess zum Zusammenbau einer erfindungsgemäßen Statorbaugruppe 20 sich nahezu kaum von dem Montageprozess einer aus dem Stand der Technik bekannten Statorbaugruppe 10 unterscheidet.

## Patentansprüche

1. Statorhalter (11) für eine Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments, wobei der Statorhalter (11) einen sich in axialer Richtung entlang einer Drehachse des Statorhalters (11) erstreckenden Aufnahmebereich (12) und einen, in einem funktionsgemäßen Verwendungszustand in axialer Richtung an den Aufnahmebereich (12) angrenzenden, sich in axialer Richtung entlang der Drehachse des Statorhalters (11) erstreckenden Befestigungsbereich (13) aufweist, wobei der Aufnahmebereich (12) zur Aufnahme eines ersten Statorelements (14A) und eines zweiten Statorelements (14B) am Statorhalter (11) ausgebildet ist, und wobei der Befestigungsbereich (13) eine Befestigungshülse (13A) zur drehfesten Befestigung des Statorhalters (11) auf der Welle aufweist, wobei der Aufnahmebereich (12) und der Befestigungsbereich (13) durch getrennte Bauteile und/oder getrennte Baugruppen gebildet sind,
wobei das zweite Statorelement (14B) in axialer Richtung von einer, bezogen auf einen funktionsgemäßen Verwendungszustand des Statorhalters (11), dem Befestigungsbereich (13) zugewandten Seite in den Aufnahmebereich (12) einführbar ist und mittels eines ersten, auf der dem Befestigungsbereich (13) zugewandten Seite in axialer Richtung montierbaren Fixierringes (15B) axial am Statorhalter (11) festlegbar ist, und wobei der erste Fixierring (15B) Teil des den Befestigungsbereich (13) bildenden Bauteils und/oder der den Befestigungsbereich (13) bildenden Baugruppe ist und in einem, bezogen auf einen funktionsgemäßen Verwendungszustand des Statorhalters (11), dem Aufnahmebereich (12) zugewandten Endbereich der Befestigungshülse (13A) an der Befestigungshülse (13A) angebunden ist,
wobei der erste Fixierring (15B) in radialer Richtung außen an der Befestigungshülse (13A) angeordnet ist, wobei die Befestigungshülse (13A) einen sich in radialer Richtung nach außen erstreckenden Flansch aufweist, an dem der Fixierring (15B) befestigt ist **dadurch gekennzeichnet, dass**
der Fixierring (15B) eine radiale Nut aufweist über die der Fixierring (15B) radial am Flansch befestigt ist, wobei der Flansch das dem Aufnahmebereich (12) zugewandte Ende der Befestigungshülse (13A) bildet, um eine direkte Verbindung zwischen Fixierring (15B) und Aufnahmebereich (12) zu ermöglichen .

2. Statorhalter (11) nach Anspruch 1, **dadurch gekennzeichnet, dass** der Statorhalter (11) derart ausgebildet ist, dass das erste Statorelement (14A) in axialer Richtung von einer, bezogen auf einen funktionsgemäßen Verwendungszustand des Statorhalters (11), vom Befestigungsbereich (13) abgewandten Seite in den Aufnahmebereich (12) einführbar ist und mittels eines zweiten, auf der vom Befestigungsbereich (13) abgewandten Seite in axialer Richtung montierbaren Fixierringes (15A) axial am Statorhalter (11) festlegbar ist.

3. Statorbaugruppe (20) für eine Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments, wobei die Statorbaugruppe (20) einen Statorhalter (11), ein erstes Statorelement (14A), ein zweites Statorelement (14B) und zwei Fixierringe (15A, 15B) aufweist, wobei ein zweiter Fixierring (15A) zur axialen Festlegung des ersten Statorelements (14A) am Statorhalter (11) dient und ein erster Fixierring (15B) zur axialen Festlegung des zweiten Statorelements (14B) am Statorhalter (11), **dadurch gekennzeichnet, dass** der Statorhalter (11) nach einem der Ansprüche 1 bis 2 ausgebildet ist.

4. Verfahren zum Zusammenbau einer Statorbaugruppe (20) für eine Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments, **dadurch gekennzeichnet, dass** die Statorbaugruppe (20) nach Anspruch 3 ausgebildet ist,
wobei
- in einem ersten Schritt ein zweites Statorelement (14B) in axialer Richtung von einer, bezogen auf einen funktionsgemäßen Verwendungszustand des Statorhalters (11), dem Befestigungsbereich (13) zugewandten Seite in den Aufnahmebereich (12) des Statorhalters (11) eingeführt wird,
- in einem zweiten Schritt der Aufnahmebereich (12) des Statorhalters (11) mit dem Befestigungsbereich (13) des Statorhalters (11) verbunden wird,
- und vorzugsweise gleichzeitig mit dem Verbinden von Aufnahmebereich (12) und Befestigungsbereich (13) im zweiten Schritt, gegebenenfalls in einem weiteren Schritt, das zweite Statorelement (14B) in axialer Richtung am Statorhalter (11) mittels eines ersten, auf der dem Befestigungsbereich (13) des Statorhalters (11) zugewandten Seite in axialer Richtung montierbaren Fixierringes (15B) axial festgelegt wird, wobei der erste
Fixierring (15B) in radialer Richtung außen an der Befestigungshülse (13A) angeordnet wird, die einen sich in radialer Richtung nach außen erstreckenden Flansch aufweist und der erste
Fixierring (15B) über den sich in radialer Richtung nach außen erstreckenden Flansch an der Befestigungshülse (13A) befestigt wird, wobei der erste
Fixierring (15B) eine radiale Nut aufweist über die der Fixierring (15B) radial am Flansch befestigt ist, wobei der Flansch das dem Aufnahmebereich (12) zugewandte Ende der Befestigungshülse (13A) bildet, um eine direkte Verbindung zwischen Fixierring (15B) und Aufnahmebereich (12) zu ermöglichen.

5. Verfahren nach Anspruch 4,
**dadurch gekennzeichnet, dass** in einem weiteren Schritt, ein erstes Statorelement (14A) in axialer Richtung von einer, bezogen auf einen funktionsgemäßen Verwendungszustand des Statorhalters (11), vom Befestigungsbereich (13) abgewandten Seite in den Aufnahmebereich (12) des Statorhalters (11) eingeführt wird und in einem weiteren Schritt in axialer Richtung am Statorhalter (11) mittels eines zweiten, auf der vom Befestigungsbereich (13)
des Statorhalters (11) abgewandten Seite in axialer Richtung montierbaren Fixierringes (15A) axial festgelegt wird.

6. Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments, wobei die Drehmomentsensorvorrichtung eine Statorbaugruppe (20) mit einem Statorhalter (11) aufweist, **dadurch gekennzeichnet, dass**
die Statorbaugruppe (20) nach Anspruch 3 ausgebildet ist.

7. Kraftfahrzeug mit einer Drehmomentsensorvorrichtung zur Erfassung eines auf eine Lenkwelle eines Kraftfahrzeugs aufgebrachten Drehmoments,
**dadurch gekennzeichnet, dass**
die Drehmomentsensorvorrichtung nach Anspruch 6 ausgebildet ist.

## Claims

1. Stator holder (11) for a torque sensor device for sensing a torque applied to a shaft, in particular for sensing a torque applied to a steering shaft of a motor vehicle, wherein the stator holder (11) has a receiving region (12) extending in the axial direction along an axis of rotation of the stator holder (11) and a fastening region (13) which, in a functional use state, is adjacent to the receiving region (12) in the axial direction and extends in the axial direction along the axis of rotation of the stator holder (11), wherein the receiving region (12) is designed for receiving a first stator element (14A) and a second stator element (14B) on the stator holder (11), and wherein the fastening region (13) has a fastening sleeve (13A) for the fastening of the stator holder (11) on the shaft for rotation therewith, wherein the receiving region (12) and the fastening region (13) are formed by separate components and/or separate assemblies, wherein the second stator element (14B) can be introduced into the receiving region (12) in the axial direction from a side facing the fastening region (13), with respect to a functional use state of the stator holder (11), and can be secured axially on the stator holder (11) by means of a first fixing ring (15B) which can be mounted in the axial direction on the side facing the fastening region (13), and wherein the first fixing ring (15B) is part of the component forming the fastening region (13) and/or of the assembly forming the fastening region (13), and is connected to the fastening sleeve (13A) in an end region of the fastening sleeve (13A) that faces the receiving region (12), with respect to a functional use state of the stator holder (11), wherein the first fixing ring (15B) is arranged on the outside of the fastening sleeve (13A) in the radial direction, wherein the fastening sleeve (13A) has a flange which extends outwards in the radial direction and to which the fixing ring (15B) is fastened, **characterized in that** the fixing ring (15B) has a radial groove via which the fixing ring (15B) is fastened radially to the flange, wherein the flange forms that end of the fastening sleeve (13A) which faces the receiving region (12), in order to permit a direct connection between fixing ring (15B) and receiving region (12).

2. Stator holder (11) according to Claim 1, **characterized in that** the stator holder (11) is designed in such a manner that the first stator element (14A) can be introduced into the receiving region (12) in the axial direction from a side facing away from the fastening region (13), with respect to a functional use state of the stator holder (11), and can be secured axially on the stator holder (11) by means of a second fixing ring (15A) which can be mounted in the axial direction on the side facing away from the fastening region (13) .

3. Stator assembly (20) for a torque sensor device for sensing a torque applied to a shaft, in particular for sensing a torque applied to a steering shaft of a motor vehicle, wherein the stator assembly (20) has a stator holder (11), a first stator element (14A), a second stator element (14B) and two fixing rings (15A, 15B), wherein a second fixing ring (15A) serves for the axial fixing of the first stator element (14A) on the stator holder (11) and a first fixing ring (15B) for the axial fixing of the second stator element (14B) on the stator holder (11), **characterized in that** the stator holder (11) is designed according to either of Claims 1 and 2.

4. Method for assembling a stator assembly (20) for a torque sensor device for sensing a torque applied to a shaft, in particular for sensing a torque applied to a steering shaft of a motor vehicle, **characterized in that** the stator assembly (20) is designed according to Claim 3, wherein
- in a first step a second stator element (14B) is introduced into the receiving region (12) of the stator holder (11) in the axial direction from a side facing the fastening region (13), with respect to a functional use state of the stator holder (11),
- in a second step the receiving region (12) of the stator holder (11) is connected to the fastening region (13) of the stator holder (11),
- and preferably at the same time with the connection of receiving region (12) and fastening region (13) in the second step, optionally in a further step, the second stator element (14B) is axially secured on the stator holder (11) in the axial direction by means of a first fixing ring (15B) which can be mounted in the axial direction on the side facing the fastening region (13) of the stator holder (11), wherein the first fixing ring (15B) is arranged in the radial direction on the outside of the fastening sleeve (13A) which has a flange extending outwards in the radial direction, and the first fixing ring (15B) is fastened to the fastening sleeve (13A) via the flange extending outwards in the radial direction, wherein the first fixing ring (15B) has a radial groove via which the fixing ring (15B) is fastened radially to the flange, wherein the flange forms that end of the fastening sleeve (13A) which faces the receiving region (12), in order to permit a direct connection between fixing ring (15B) and receiving region (12).

5. Method according to Claim 4, **characterized in that**, in a further step, a first stator element (14A) is introduced into the receiving region (12) of the stator holder (11) in the axial direction from a side facing away from the fastening region (13), with respect to a functional use state of the stator holder (11), and, in a further step, is secured axially on the stator holder (11) in the axial direction by means of a second fixing ring (15A) which can be mounted in the axial direction on the side facing away from the fastening region (13) of the stator holder (11).

6. Torque sensor device for sensing a torque applied to a shaft, in particular for sensing a torque applied to a steering shaft of a motor vehicle, wherein the torque sensor device has a stator assembly (20) with a stator holder (11), **characterized in that** the stator assembly (20) is designed according to Claim 3.

7. Motor vehicle with a torque sensor device for sensing a torque applied to a steering shaft of a motor vehicle, **characterized in that** the torque sensor device is designed according to Claim 6.

## Revendications

1. Support de stator (11) pour un dispositif de capteur de couple pour la détection d'un couple appliqué à un arbre, notamment pour la détection d'un couple appliqué à un arbre de direction d'un véhicule automobile, le support de stator (11) comprenant une zone de réception (12) qui s'étend en direction axiale le long d'un axe de rotation du support de stator (11) et une zone de fixation (13) qui, dans un état d'utilisation approprié au fonctionnement, est adjacente en direction axiale à la zone de réception (12) et qui s'étend en direction axiale le long de l'axe de rotation du support de stator (11), la zone de réception (12) étant configurée pour la réception d'un premier élément de stator (14A) et d'un deuxième élément de stator (14B) sur le support de stator (11), et la zone de fixation (13) comprenant une douille de fixation (13A) pour la fixation immobile en rotation du support de stator (11) sur l'arbre, la zone de réception (12) et la zone de fixation (13) étant formées par des composants séparés et/ou des modules séparés,
le deuxième élément de stator (14B) pouvant être inséré en direction axiale à partir d'un côté tourné vers la zone de fixation (13), par rapport à un état d'utilisation approprié au fonctionnement du support de stator (11), dans la zone de réception (12) et pouvant être immobilisé axialement sur le support de stator (11) au moyen d'une première bague de fixation (15B) pouvant être montée en direction axiale sur le côté tourné vers la zone de fixation (13), et la première bague de fixation (15B) faisant partie du composant formant la zone de fixation (13) et/ou du module formant la zone de fixation (13), et étant rattachée à la douille de fixation (13A) dans une zone d'extrémité de la douille de fixation (13A) tournée vers la zone de réception (12), par rapport à un état d'utilisation approprié au fonctionnement du support de stator (11), la première bague de fixation (15B) étant agencée en direction radiale à l'extérieur sur la douille de fixation (13A),
la douille de fixation (13A) comprenant une bride qui s'étend vers l'extérieur dans la direction radiale, à laquelle la bague de fixation (15B) est fixée, **caractérisé en ce que** la bague de fixation (15B) comprend une rainure radiale par l'intermédiaire de laquelle la bague de fixation (15B) est fixée radialement à la bride, la bride formant l'extrémité de la douille de fixation (13A) tournée vers la zone de réception (12), afin de permettre une liaison directe entre la bague de fixation (15B) et la zone de réception (12).

2. Support de stator (11) selon la revendication 1, **caractérisé en ce que** le support de stator (11) est configuré de telle sorte que le premier élément de stator (14A) peut être inséré en direction axiale à partir d'un côté détourné de la zone de fixation (13), par rapport à un état d'utilisation approprié au fonctionnement du support de stator (11), dans la zone de réception (12) et peut être immobilisé axialement sur le support de stator (11) au moyen d'une deuxième bague de fixation (15A) pouvant être montée en direction axiale sur le côté détourné de la zone de fixation (13).

3. Module de stator (20) pour un dispositif de capteur de couple pour la détection d'un couple appliqué à un arbre, notamment pour la détection d'un couple appliqué à un arbre de direction d'un véhicule automobile, le module de stator (20) comprenant un support de stator (11), un premier élément de stator (14A), un deuxième élément de stator (14B) et deux bagues de fixation (15A, 15B), une deuxième bague de fixation (15A) servant à l'immobilisation axiale du premier élément de stator (14A) sur le support de stator (11) et une première bague de fixation (15B) servant à l'immobilisation axiale du deuxième élément de stator (14B) sur le support de stator (11), **caractérisé en ce que** le support de stator (11) est configuré selon l'une quelconque des revendications 1 à 2.

4. Procédé d'assemblage d'un module de stator (20) pour un dispositif de capteur de couple pour la détection d'un couple appliqué à un arbre, notamment pour la détection d'un couple appliqué à un arbre de direction d'un véhicule automobile, **caractérisé en ce que** le module de stator (20) est configuré selon la revendication 3,
- dans une première étape, un deuxième élément de stator (14B) étant inséré en direction axiale à partir d'un côté tourné vers la zone de fixation (13), par rapport à un état d'utilisation approprié au fonctionnement du support de stator (11), dans la zone de réception (12) du support de stator (11),
- dans une deuxième étape, la zone de réception (12) du support de stator (11) étant reliée à la zone de fixation (13) du support de stator (11),
- et de préférence simultanément à la liaison de la zone de réception (12) et de la zone de fixation (13) dans la deuxième étape, éventuellement dans une étape supplémentaire, le deuxième élément de stator (14B) étant immobilisé axialement en direction axiale sur le support de stator (11) au moyen d'une première bague de fixation (15B) pouvant être montée en direction axiale sur le côté tourné vers la zone de fixation (13) du support de stator (11), la première bague de fixation (15B) étant agencée en direction radiale à l'extérieur sur la douille de fixation (13A), qui comprend une bride qui s'étend vers l'extérieur en direction radiale, et la première bague de fixation (15B) étant fixée à la douille de fixation (13A) par l'intermédiaire de la bride qui s'étend vers l'extérieur en direction radiale, la première bague de fixation (15B) comprenant une rainure radiale par l'intermédiaire de laquelle la bague de fixation (15B) est fixée radialement à la bride, la bride formant l'extrémité de la douille de fixation (13A) tournée vers la zone de réception (12), afin de permettre une liaison directe entre la bague de fixation (15B) et la zone de réception (12).

5. Procédé selon la revendication 4, **caractérisé en ce que**, dans une étape supplémentaire, un premier élément de stator (14A) est inséré en direction axiale à partir d'un côté détourné de la zone de fixation (13), par rapport à un état d'utilisation approprié au fonctionnement du support de stator (11), dans la zone de réception (12) du support de stator (11) et, dans une étape supplémentaire, est immobilisé axialement en direction axiale sur le support de stator (11) au moyen d'une deuxième bague de fixation (15A) pouvant être montée en direction axiale sur le côté détourné de la zone de fixation (13) du support de stator (11).

6. Dispositif de capteur de couple pour la détection d'un couple appliqué à un arbre, notamment pour la détection d'un couple appliqué à un arbre de direction d'un véhicule automobile, le dispositif de capteur de couple comprenant un module de stator (20) muni d'un support de stator (11), **caractérisé en ce que** le module de stator (20) est configuré selon la revendication 3.

7. Véhicule automobile muni d'un dispositif de capteur de couple pour la détection d'un couple appliqué à un arbre de direction d'un véhicule automobile, **caractérisé en ce que** le dispositif de capteur de couple est configuré selon la revendication 6.
